# EUROPÄISCHE PATENTSCHRIFT

(11) **EP 0 781 027 B1**
(45) Veröffentlichungstag und Bekanntmachung des Hinweises auf die Patenterteilung: **15.09.2004**
(21) Anmeldenummer: 96402843.5
(22) Anmeldetag: 20.12.1996
(51) Int. Cl.: H04M 3/54, H04M 1/00, H04M 3/436, H04M 1/66

(54) **Verfahren zum Entscheiden über die Annahme oder Nichtannahme eines Anrufs**
Method of judging the acceptance or non-acceptance of a call
Méthode pour juger de l'acceptation ou non-acceptation d'un appèl

(30) Priorität: 22.12.1995 DE 19548190
(43) Veröffentlichungstag der Anmeldung: 25.06.1997
(73) Patentinhaber: ALCATEL, 75008 Paris (FR)
(72) Erfinder: Schneider, Jan, 70174 Stuttgart (DE); Herzog, Günther, 70439 Stuttgart (DE); Schmietainski, Anke, Dr., 71282 Hemmingen (DE)
(74) Vertreter: Brose, Gerhard, Dipl.-Ing.

(56) Entgegenhaltungen:
- EP-A- 0 656 717
- EP-A- 0 676 884
- US-A- 5 329 578
- US-A- 5 440 620
- US-A- 5 467 388

## Beschreibung

Die Erfindung betrifft ein Verfahren zum Entscheiden über die Annahme oder Nichtannahme eines Anrufs, nach dem Oberbegriff von Anspruch 1, eine Schaltungseinheit nach dem Oberbegriff von Anspruch 4, ein Fernmeldeendgerät nach dem Oberbegriff von Anspruch 5, eine tragbare Geräteeinheit, insbesondere eine Chipkarte, nach dem Oberbegriff von Anspruch 6 und eine Netzkomponente für ein Fernmeldenetz, nach dem Oberbegriff von Anspruch 7.

Es gibt immer mehr Möglichkeiten, eine bestimmte Person nahezu jederzeit und überall telefonisch zu erreichen. Hierzu zählt zunächst ein dichteres Telefonnetz mit teilweise mehreren parallelgeschalteten Apparaten, an denen gleichberechtigt ein Anruf angenommen werden kann, beispielsweise innerhalb eines Einfamilienhauses oder in Büro, Lager und Werkstatt. Weiter zählen hierzu alle Arten von Rufumleitung, einschließlich der Rufweiterleitung. Auch die nicht leitungsgebundenen Endgeräte, vom "Schnurlostelefon" über Mobilfunk und Handys bis zum Satellitenfunk erweitern die Erreichbarkeit. Hinzu kommt die Verwendung einheitlicher Rufnummern, so daß nicht mehr zwischen dem Apparat im Büro, dem im Auto und dem zu Hause unterschieden werden muß. Weiter besteht die Möglichkeit, von einem fremden Apparat aus zu Hause oder bei einer Zentrale anzurufen und durch geeignete Signalisierung diesen Apparat vorübergehend gewissermaßen zum eigenen Apparat zu machen. Für solche Anrufe und Signalisierungen sind beispielsweise Chipkarten oder Telefonkarten vorgesehen, womit einerseits ankommende Rufe zu diesem Apparat umgeleitet werden und andererseits die Gebühren abgehender Rufe auf das eigene Konto gebucht werden. Sind hier noch besonders ausgerüstete Geräte erforderlich, so kann dasselbe auch durch akustische oder induktive Einkopplung erfolgen.

Hier drängt sich aber die Forderung nach einer sinnvollen Abwehrmöglichkeit auf.

Die einfachste Abwehrmöglichkeit ist das Stummstellen oder Nichtbeachten des Telefons. Durch ein Rufnummernsieb können bestimmte Anrufer durchgelassen oder durch einen anderen Tonruf angezeigt werden.

Eine verbreitete Möglichkeit besteht darin, einen Anrufbeantworter parallelzuschalten, beim Aufsprechen des Anrufers mitzuhören und sich dann zu entscheiden, ob man annimmt, oder nicht. Abgesehen davon, daß man dabei auf jeden Fall gestört wird, sofern man den Anruf überhaupt hört, eignet sich dies nicht um beispielsweise einen schlafenden Bewohner in einem brennenden Haus zu wecken.

Hier könnte eine Einstufung der Anrufe oder Anrufer nach Dringlichkeit abhelfen. Bei der Lösung nach US-Patent 5,329,578 könnte beispielsweise der Polizei und der Feuerwehr eine hohe Dringlichkeit zugeordnet werden. Abgesehen davon, daß diese dann die bekannten Notrufnummern auch abgehend verwenden müßten, hat die dort und auch sonst oft vorgesehene Rufumleitung in diesem Fall keinen Sinn.

Daß der Chef berechtigt sein mag, in jede dienstliche Besprechung telefonisch einzudringen und daß die Oma berechtigt sein mag, auch die Weihnachtsfeier auf einer abgelegenen Berghütte telefonisch zu unterbrechen, kann noch gutgeheißen werden können. Umgekehrt muß dies aber sicher nicht so sein, wie es gemäß der Lösung nach o.g. US-Patent 5,329,578 dann wohl ist. Und ob die beiden dies wirklich wollen, ist auch zweifelhaft. Dies gilt schon im Hinblick auf die erhöhten Kosten im Zusammenhang mit einer Rufumleitung in öffentlichen Netzen.

Das US-Patent 5,440,620 gibt eine Lösung an, wie man mit einfachen Mitteln seine persönliche Erreichbarkeit vorgeben kann. Es werden Beispiele angegeben, nach denen einerseits verschiedene Anrufer unterschiedlich behandelt werden, nach denen dies aber auch zu verschiedenen Zeiten unterschiedlich erfolgen kann.

Hier schafft die Erfindung Abhilfe durch ein Verfahren nach der Lehre des Anspruchs 1, eine Schaltungseinheit nach der Lehre des Anspruchs 4, ein Fernmeldeendgerät nach der Lehre des Anspruchs 5, eine tragbare Geräteeinheit nach der Lehre des Anspruchs 6 und eine Netzkomponente nach der Lehre des Anspruchs 7.

Der Grundgedanke dabei ist, daß auf jeden Fall eine automatische Entscheidung nach frei vorgegebenen Kriterien erfolgt, wobei sowohl solche Daten verwertet werden, die von Anruferseite her signalisiert werden, wie auch solche, die die aktuelle Situation des Angerufenen näher kennzeichnen, wozu auch sein aktueller Aufenthaltsort gehört.

Weitere Ausgestaltungen der Erfindung sind den Unteransprüchen zu entnehmen.

Aus der Signalisierung von der Anruferseite kann bei an sich dem Anzurufenden bekannten Anrufern die Anruferidentität (z.B. aus der Rufnummer) beinahe immer abgeleitet werden, wenn überhaupt irgendwelche Daten signalisiert werden, was hier aber unterstellt wird. Direkt aus der Rufnummer läßt sich auch ableiten, ob es sich um ein Orts- oder ein Ferngespräch handelt. Die Ableitung eines Dringlichkeitsmerkmals aus der Rufnummer des Anrufers erscheint nicht sachgerecht; jedoch kann, beispielsweise durch Nachwahl einer bekannten Ziffer oder eines vereinbarten Kodes, ein eigenständiges aussagekräftiges Merkmal abgeleitet werden. Auch die Aussage darüber, ob es sich um einen bereits umgeleiteten oder einen direkten Anruf handelt, kann für die Auswertung sinnvoll sein.

Zu den Daten, die die aktuelle Situation kennzeichnen, gehört in der Regel zunächst die Zeit. Dienstzeit, Freizeit und Wochenende bilden klare Blöcke, die zeitlich wenig schwanken und den Kreis der primär erwünschten Gesprächspartner jeweils in unterschiedlicher Weise begrenzen. Bei Erreichbarkeit über Mobilfunk, über alternative Endgeräte, zum Beispiel in Wohnung, Büro und Lager, oder Umleitung auf ein entferntes Gerät im Wochenendhaus, im Vereinsheim oder beim Kunden wird jeweils direkt oder indirekt der Aufenthaltsort ermittelt, der oft deutlich die aktuelle Interessenlage kennzeichnet. Die aktuelle Situation kann auch nicht zuletzt durch manuelle Vorgaben gekennzeichnet werden.

Die Auswertung kann erfolgen im gerufenen Gerät, in einem Server oder unter Zuhilfenahme einer Chipkarte, die in ein beliebiges dafür vorgesehenes Gerät einsteckbar ist.

Im folgenden wird die Erfindung anhand eines Ausführungsbeispiels unter Zuhilfenahme der beiliegenden Zeichnung weiter erläutert.

Die einzige Figur,

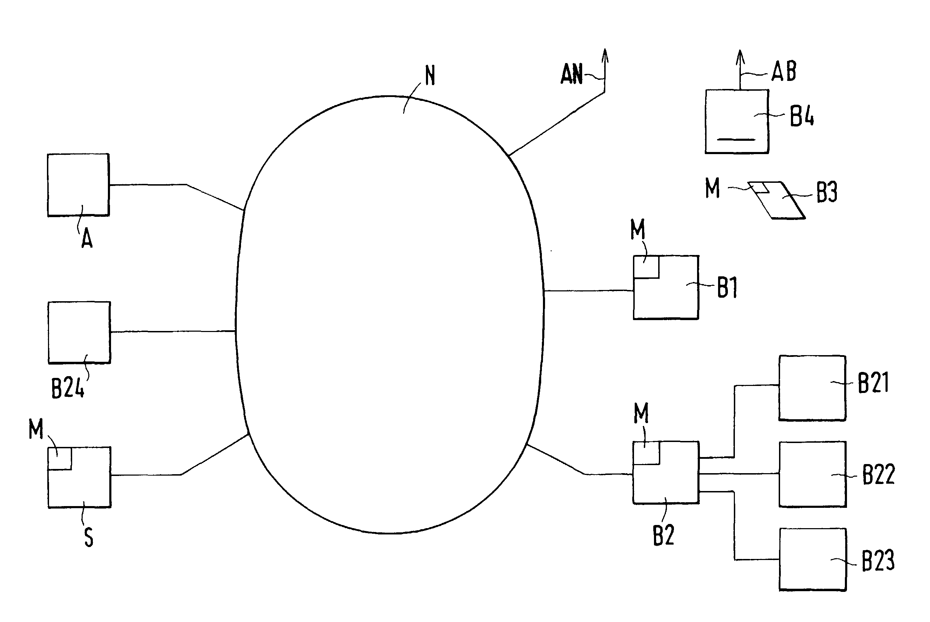

- Fig. 1: zeigt ein System zur Durchführung des erfindungsgemäßen Verfahrens, mit erfindungsgemäßen Schaltungseinheiten, einem erfindungsgemäßen Fernmeldeendgerät, einer erfindungsgemäßen tragbaren Geräteeinheit und erfindungsgemäßen Netzkomponenten.

Das System nach Figur 1 zeigt ein Fernmeldenetz N, mehrere leitungsgebundene Fernmeldeendgeräte A, B1, B21, B22, B23 und B24, eine kleine Nebenstellenzentrale B2, ein über Funk erreichbares Fernmeldeendgerät B4, eine Chipkarte B3 und eine als Server bezeichnete Diensteanbietereinheit S. Das Fernmeldeendgerät B1, die Nebenstellenzentrale B2, der Server S und die Chipkarte B3 enthalten je ein Modul M. Das Fernmeldeendgerät B4 enthält einen Chipkartenleser und ist mittels einer benutzerseitigen Antenne AB und einer netzseitigen Antenne AN an das Fernmeldenetz N angeschlossen.

Die Module M sind Beispiele für die erfindungsgemäßen Schaltungseinheiten. Das Fernmeldeendgerät B1 ist ein Beispiel für ein erfindungsgemäß ausgestaltetes Fernmeldeendgerät. Die Chipkarte B3 ist ein Beispiel für eine erfindungsgemäße tragbare Geräteeinheit. Die Nebenstellenzentrale B2 ist ein Beispiel für eine erfindungsgemäße Netzkomponente. Der Server S ist ein Beispiel für eine erfindungsgemäße Netzkomponente, die mehreren Nutzern gemeinsam ist.

Das Fernmeldeendgerät A steht hier stellvertretend für eine Vielzahl von beliebigen, nicht notwendigerweise erfindungsgemäß ausgestatteten Endgeräten. Primär ist hier an Sprachendgeräte gedacht, andere sind aber nicht grundsätzlich ausgeschlossen.

Die kleine Nebenstellenzentrale B2 und die Fernmeldeendgeräte B21, B22 und B23 bilden hier eine Hausanlage, wobei eines der Endgeräte im Wohnbereich, ein anderes im Büro und das dritte im Hobbyraum sein mag. Über das Fernmeldenetz N ist das Fernmeldeendgerät B24 im Wochenendhaus wie ein Gerät der Nebenstellenanlage erreichbar. Vom Netz N kommende Rufe sind dorthin umleitbar. Ob die Umleitung durch Weiterleitung auf einem weiteren Kanal erfolgt oder durch Eingreifen in den Verbindungsaufbau, ist dabei unerheblich. Hier wird vereinfachend unterstellt, daß die Nebenstellenzentrale B2 unter zwei verschiedenen Nummern vom Netz N aus erreichbar ist, wovon eine unter dem bürgerlichen Namen und eine unter dem Firmennamen bekannt ist. Jedes angeschlossene Gerät kann aber von beiden Nummern aus erreichbar werden. Die Verteilung erfolgt durch das Modul M in der Nebenstellenzentrale B2. Auch das Fernmeldeendgerät B24 hat seine eigene Nummer. ,

Ruft nun ein Anrufer vom Fernsprechendgerät A den Inhaber der Nebenstellenzentrale B2 an, so können verschiedene Fälle auftreten, die im folgenden nur beispielhaft angedeutet sind:
- Der Inhaber befindet sich zu üblichen Arbeitszeiten im Büro und hat dies, beispielsweise durch Benutzung des dortigen Geräts, an das Modul M in der Nebenstellenzentrale B2 gemeldet. Ruft der Anrufer unter der dem Firmennamen zugeordneten Nummer, der Firmennummer, an, so wird er auf jeden Fall durchgeschaltet. Ruft er unter der dem bügerlichen Namen zugeordneten Nummer, der Privatnummer, an, so muß ein weiteres Kriterium hinzukommen, damit der Anruf durchgeschaltet wird:
   -- Anrufe, die, auf welche Weise auch immer, als dringlich gekennzeichnet sind, werden durchgeschaltet.
   -- Das Modul M enthält ein Rufnummernsieb, durch das bestimmte Personen auch bei Anruf unter der Privatnummer ins Büro durchgeschaltet werden.
   -- Das Modul M kann die Nachwahl eines für diesen Zweck vereinbarten Kodes erkennen und ins Büro durchschalten.
- Der Inhaber befindet sich außerhalb üblicher Arbeitszeiten im Büro. Anrufe unter der Firmennummer und unter der Privatnummer werden jetzt gleich behandelt. In beiden Fällen muß aber ein weiteres Kriterium hinzukommen, damit der Anruf durchgeschaltet wird.
- Der Inhaber befindet sich abends in der Wohnung. Jetzt werden Anrufe an die Privatnummer auf jeden Fall durchgeschaltet, für Anrufe unter der Firmennummer gelten Einschränkungen ähnlich wie oben.
- Der Inhaber befindet sich im Hobbyraum. Anrufe unter der Privatnummer werden durchgeschaltet, wenn sie als dringlich gekennzeichnet sind oder wenn ein Rufnummernsieb sie als von Hobbyfreunden kommend erkennt. Anrufe unter der Firmennummer werden durchgeschaltet, wenn sie als sehr dringlich gekennzeichnet sind.
- Der Inhaber befindet sich im Wochenendhaus. Schon aus Kostengründen erfolgt hier eine Umleitung nur in Sonderfällen. Hier muß entweder eine besondere Dringlichkeit oder ein besonderer Kode signalisiert werden.
- Bei besonderen Anlässen, z.B. an Weihnachten, wird nur mittels Rufnummernsieben oder aufgrund besonderer Dringlichkeit durchgeschaltet.
- Manuell können die Vorgaben vorübergehend oder dauerhaft verändert werden. Dies kann nach vorbestimmten Prozeduren von einem der Endgeräte aus über Tastatur und gegebenenfalls mit Rückmeldungen vom Modul M über Sprachausgabe oder Display erfolgen. Beispielsweise soll vorübergehend das Gerät in der Wohnung unter denjenigen Bedingungen erreicht werden, die sonst für das Gerät im Büro gelten.

Hier wurde zunächst noch nichts darüber ausgesagt, was mit Anrufen erfolgt, die nicht angenommen werden sollen und wie eine etwaige Dringlichkeitskennzeichnung erfolgen könnte und welche Dringlichkeits- und Wichtigkeitsstufen vorgesehen werden könnten. Dies ist auch nicht primär das Ziel der vorliegenden Erfindung.

Hierzu kann jede schon bekannte oder noch bekannt werdende Lösung eingesetzt werden.

Für nicht anzunehmende Anrufe gibt die schon erwähnte US-Patentschrift 5,329,578 einige Möglichkeiten, wie etwa vordefinierte Antworten oder die Verbindung mit einem Anrufbeantworter. Die einfachste Lösung ist die Nichtannahme durch Unterdrückung des Tonrufs. Auch eine Signalisierung an das Netz oder den Anrufer kann erwogen werden, woraufhin dann der Anruf ausgelöst werden könnte. Dem Anrufer kann signalisiert werden, unter welchen Voraussetzungen (Kode, Dringlichkeit) er doch zum Ziel kommen könnte.

Dringlichkeits- oder Wichtigkeitsmerkmale könnten durch Nachwahl eines individuell vereinbarten Kodes oder auf eine vom Netzbetreiber vorgesehene Weise vom Anrufer eingegeben werden. Um einen Mißbrauch zu erschweren könnte eine Gebühr dafür enthoben werden, die teilweise dem Netzbetreiber für die Bereitstellung dieses Dienstes und teilweise den Anzurufenden gutgeschrieben werden könnte.

Der Inhaber des Fernsprechendgeräts B1 kann im Prinzip dieselben Funktionen mit gewissen Einschränkungen mit diesem Endgerät B1 verwirklichen. Die Kriterien werden dabei möglicherweise gröber oder es werden mehr manuelle Vorgaben erforderlich.

Jeder Teilnehmer an einem Fernsprechendgerät A kann sich mittels eines Diensteanbieters zu diesem Zweck eines Servers S bedienen, um so ebenfalls in den Genuß solcher Funktionen zu kommen. Dieser Teilnehmer ist dann unter einer Rufnummer erreichbar, unter der ein Anruf oder zumindest die Signalisierung eines Anrufs zunächst zum Server S gelangt und dort im Modul M einen Speicherbereich adressiert, in dem die spezifischen Vorgaben gerade dieses Teilnehmers abgelegt sind. Der Server S mit dem Modul M wirkt dann durch Signalisierung so mit dem Netz N zusammen, daß ein solcher Anruf im Sinne der Vorgaben dieses Teilnehmers behandelt wird.

Es ist bekannt, mittels Akustikkopplern, induktiver Ankopplung oder auch über eine Chipkarte B3 ein beliebiges oder im Falle der Chipkarte ein dafür geeignetes Endgerät gewissermaßen vorübergehend zu seinem eigenen Endgerät zu machen. Dabei wird an eine hierfür vorgesehene Stelle im Netz N signalisiert, wo man sich gerade befindet und wo man gerade erreichbar ist.,Die an den Inhaber z.B. der Chipkarte B3 gerichteten Rufe werden dann an dasjenige Gerät gerichtet, an das sich dieser Inhaber angekoppelt hat, beispielsweise durch Einstecken seiner Chipkarte B3 in den Chipkartenleser des Fernmeldeendgeräts B4, z.B. eines Mobilfunktelefons. Durch das in der Chipkarte B3 oder der sonstigen angekoppelten Geräteeinheit enthaltene Modul M wird nun erreicht, daß Anrufe nur nach den jeweiligen Vorgaben angenommen oder durch Tonruf bemerkbar gemacht werden.

Es versteht sich von selbst, daß die erfindungsspezifischen Schaltungseinheiten, die Module M, nicht zwingend als separate Baugruppen vorliegen müssen, sondern funktionell mit anderen Einheiten vereinigt sein können.

## Patentansprüche

1. Verfahren zum Entscheiden über die Annahme oder Nichtannahme eines Anrufs unter Zuhilfenahme von Daten, die signalisiert werden im Zusammenhang mit dem Versuch, eine Verbindung zu einem Anzurufenden aufzubauen, bei dem zusätzlich zu den signalisierten Daten noch Daten herangezogen werden, die die augenblickliche Situation des Anzurufenden kennzeichnen, wobei die Daten nach frei vorgegebenen Kriterien miteinander verknüpft werden, **dadurch gekennzeichnet, daß** die situationskennzeichnenden Daten die ortsabhängige Interessenlage des Anzurufenden berücksichtigen.

2. Verfahren nach Anspruch 1, **dadurch gekennzeichnet, daß** die situationskennzeichnenden Daten zeitabhängige Gewohnheiten des Anzurufenden berücksichtigen.

3. Verfahren nach Anspruch 1, **dadurch gekennzeichnet, daß** manuelle Vorgaben des Anzurufenden berücksichtigt werden.

4. Schaltungseinheit (M) zum Entscheiden über die Annahme oder Nichtannahme eines Anrufs, mit Empfangsmitteln zum Empfang von Daten, die signalisiert werden im Zusammenhang mit dem Versuch, eine Verbindung zu einem Anzurufenden aufzubauen und mit Auswertemitteln, mittels derer unter Zuhilfenahme der empfangenen Daten über die Annahme oder Nichtannahme des Anrufs entschieden wird, bei der Erfassungsmittel vorhanden sind zum Erfassen von Daten, die die augenblickliche Situation des Anzurufenden erfassen, wobei die Auswertemittel diese Daten mit berücksichtigen, und wobei diese Daten nach frei vorgegebenen Kriterien miteinander verknüpft werden, **dadurch gekennzeichnet, daß** die Erfassungsmittel weiter zum Erfassen solcher Daten geeignet sind, die die ortsabhängige Interessenlage des Anzurufenden berücksichtigen.

5. Fernmeldeendgerät (B1), **dadurch gekennzeichnet, daß** es eine Schaltungseinheit (M) nach Anspruch 4 enthält.

6. Tragbare Geräteeinheit (B3), insbesondere Chipkarte, mit Ankoppelmöglichkeit an ein dafür geeignetes Fernmeldeendgerät (B4), mit Mitteln, um über ein angekoppeltes Fernmeldeendgerät den Inhaber der Geräteeinheit als vorübergehenden Nutzer des Fernmeldeendgeräts anzumelden, insbesondere ihn über dieses Fernmeldeendgerät unter einer ihm schon vorab zugewiesenen Teilnehmernummer erreichbar zu machen, **dadurch gekennzeichnet, daß** die Geräteeinheit (B3) eine Schaltungseinheit (M) nach Anspruch 4 enthält.

7. Netzkomponente (B2, S) für ein Fernmeldenetz (N), mit Mitteln zum Empfang von Daten, die signalisiert werden im Zusammenhang mit dem Versuch, eine Verbindung zu einem Anzurufenden aufzubauen, und mit Mitteln die der weiteren Behandlung dieses Verbindungsaufbauversuchs dienen, **dadurch gekennzeichnet, daß** die Netzkomponente eine Schaltungseinheit (M) nach Anspruch 4 aufweist.

8. Netzkomponente (S) für ein Fernmeldenetz, nach Anspruch 7, **dadurch gekennzeichnet, daß** sie derart gestaltet ist, daß sie für eine Vielzahl von als Anzurufende in Frage kommenden Teilnehmern die gleichen Funktionen ausführen kann.

## Claims

1. Method for deciding upon the acceptance or non-acceptance of a call, with the aid of data which are signalled in connection with the attempt to establish a connection to a subscriber to be called, in which, in addition to the signalled data, further data are used which characterize the instantaneous situation of the subscriber to be called, the data being linked to one another according to criteria that are freely predefined, **characterized in that** the data characterizing the situation take account of the location-dependent interest situation of the subscriber to be called.

2. Method according to Claim 1, **characterized in that** the data characterizing the situation take account of time-dependent habits of the subscriber to be called.

3. Method according to Claim 1, **characterized in that** manual predefinitions of the subscriber to be called are taken into account.

4. Circuit unit (M) for deciding upon the acceptance or non-acceptance of a call, comprising receiving means for receiving data that are signalled in connection with the attempt to establish a connection to a subscriber to be called, and comprising evaluation means, by means of which a decision upon the acceptance or non-acceptance of the call is made with the aid of the received data, in which circuit unit there are acquisition means for acquiring data which acquire the instantaneous situation of the subscriber to be called, the evaluation means also taking these data into account, and these data being linked to one another according to criteria that are freely predefined, **characterized in that** the acquisition means are additionally suitable for acquiring such data that take account of the location-dependent interest situation of the subscriber to be called.

5. Telecommunications terminal device (B1), **characterized in that** it contains a switching unit (M) according to Claim 4.

6. Portable device unit (B3), particularly a chip card, having the facility to be coupled to a telecommunications terminal device (B4) suitable for this purpose, comprising means of logging-on the holder of the device unit, via a coupled telecommunications terminal device, as a temporary user of the telecommunications terminal device, particularly of rendering the user reachable via this telecommunications terminal device under a subscriber number already assigned to him in advance, **characterized in that** the device unit (B3) contains a switching unit (M) according to Claim 4.

7. Network component (B2, S) for a telecommunications network (N), comprising means for receiving data that are signalled in connection with the attempt to establish a connection to a subscriber to be called, and comprising means which serve to further handle this attempt to establish a connection, **characterized in that** the network component comprises a switching unit (M) according to Claim 4.

8. Network component (S) for a telecommunications network, according to Claim 7, **characterized in that** it is configured in such a way that it can execute the same functions for a multiplicity of subscribers potentially to be called.

## Revendications

1. Procédé de décision concernant l'acceptation ou la non-acceptation d'un appel téléphonique à l'aide de données qui sont signalées en relation avec la tentative d'établir une communication vers un appelé pour lequel en plus des données signalées, d'autres données sont mises à contribution qui caractérisent la situation présente de l'appelé, les données étant liées les unes avec les autres selon des critères librement prédéfinis, **caractérisé en ce que** les données caractérisant la situation prennent en considération les intérêts de l'appelé en fonction du lieu.

2. Procédé selon la revendication 1, **caractérisé en ce que** les données caractérisant la situation prennent en considération les habitudes de l'appelé en fonction de l'heure.

3. Procédé selon la revendication 1, **caractérisé en ce que** les directives manuelles de l'appelé sont prises en considération.

4. Unité de couplage (M) destinée à décider de l'acceptation ou de la non-acceptation d'un appel, avec des moyens de réception pour recevoir des données qui sont signalées en relation avec la tentative d'établir une communication vers un appelé et avec des moyens d'exploitation au moyen desquels il est décidé de l'acceptation ou de la non-acceptation de l'appel à l'aide des données reçues pour lesquelles des moyens d'enregistrement sont disponibles en vue de l'enregistrement de données qui enregistrent la situation présente de l'appelé, les moyens d'exploitation prenant en considération ces données et ces données étant liées les unes avec les autres selon des critères librement prédéfinis, **caractérisée en ce que** les moyens d'enregistrement sont en outre aptes à enregistrer les données qui prennent en considération les intérêts de l'appelé en fonction du lieu.

5. Terminal de télécommunication (B1), **caractérisé en ce qu'**il contient une unité de couplage (M).

6. Unité d'appareil portative (B3), en particulier une carte à puce, avec possibilité de couplage à un terminal de télécommunication approprié (B4), avec des moyens permettant de déclarer le propriétaire de l'unité d'appareil en tant qu'utilisateur provisoire du terminal de télécommunication sur un terminal de télécommunication couplé, en particulier le rendre joignable sur ce terminal de télécommunication sous un numéro d'abonné qui lui a été attribué dans un premier temps, **caractérisé en ce que** l'unité d'appareil (B3) contient une unité de couplage (M) selon la revendication 4.

7. Composant de réseau (B2, S) pour un réseau de télécommunications (N), avec des moyens pour recevoir des données qui sont signalées en relation avec la tentative d'établir une communication vers un appelé, et avec des moyens qui servent au traitement ultérieur de cette tentative d'établissement de communication, **caractérisé en ce que** le composant de réseau présente une unité de couplage (M) selon la revendication 4.

8. Composant de réseau (S) pour un réseau de télécommunications selon la revendication 7, **caractérisé en ce qu'**il est conçu de telle manière qu'il peut exécuter les mêmes fonctions pour une multitude d'abonnés entrant en ligne de compte en tant qu'appelés.
